# EUROPEAN PATENT APPLICATION

(11) **EP 0 987 813 A2**
(43) Date of publication of application: **22.03.2000**
(21) Application number: 99660138.1
(22) Date of filing: 03.09.1999
(51) Int. Cl.: H02M 1/12

(54) **Filtering optimization of conducted disturbances**

(30) Priority: 14.09.1998 FI 981975
(71) Applicant: ABB Industry Oy, 00380 Helsinki (FI)
(72) Inventor: Mattila, Jukka, 00400 Helsinki (FI)
(74) Representative: Peltonen, Antti Sakari

(57) **Abstract**

A method and arrangement for optimizing the filtration of conducted highfrequency disturbances in a frequency converter, the frequency converter being coupled with a feeder to a supply network and having a variable switching frequency. The method comprises steps of defining a common mode disturbance current of a frequency converter feeder, comparing the magnitude of the defined common mode disturbance current with a predetermined limit value, and changing a switching frequency of the frequency converter, when the common mode disturbance current exceeds the predetermined limit value.

## Description

### BACKGROUND OF THE INVENTION

The present invention relates to a method and arrangement for optimizing the filtration of conducted high-frequency disturbances in a frequency converter, the frequency converter being coupled with a feeder to a supply network and having a variable switching frequency.

Due to high-speed change phenomena, electronic devices cause electromagnetic disturbances in their vicinity. The problem is particularly obvious as regards high-power devices, such as power electronic devices dealing with high currents and voltages. A high-power device of this kind is, for instance, a frequency converter commonly used for motor controlling. Frequency converters convert a known constant supply frequency to a desired output frequency. The output frequency is generated by connecting to the output DC pulses whose width is modulated in accordance with the necessary output voltage. Output voltage generation of this kind is known as pulse width modulation (PWM). The switching frequency, at which DC pulses are connected to the output of the device, is typically within the range of 1 kHz to 16 kHz. Some frequency converters change the switching frequency on the basis of the desired output frequency or some similar criteria.

In order to minimize the coupling losses of high-power semiconductors, the transition of the high-power semiconductors from one state into another should occur as fast as possible. High rates of change together with high voltages and currents to be coupled inevitably produce electromagnetic disturbances, which spread in the environment both as radiation and as conducted phenomena. Conducted disturbances distort the supply network voltage, and conducted radio-frequency disturbances further emit electromagnetic radiation, which may interfere with other sensitive devices within the range of radiation. A plurality of different standards define the limits below which the electromagnetic emission from the electric devices should remain. Compliance with the standards contributes to the electromagnetic compatibility of various devices.

In order to reduce conducted high-frequency disturbances, RFI (radio frequency interference) filters to be coupled to feeders are commonly used. These filters typically comprise a coupling of capacitive and inductive components. The RFI filter inductance may comprise both phase-specific and common mode choke, but to save on costs, common mode chokes alone are often used in these filters. A problem arises, when the RFI filter employs common mode chokes alone, which get saturated. Saturation may result from high capacitance of motor cables of the frequency converter with respect to earth, whereby the capacitances generate a high common mode current during transitions. The switching frequency of the frequency converter also has an effect on the magnitude of the common mode current passing through earth capacitances. The common mode current tends to return to the source of disturbance, i.e. to the high-power semiconductors of the frequency converter, either through anti-interference capacitors earthed via a DC intermediate circuit of the frequency converter or through the earth capacitances of the supply network. If the switching frequency of the frequency converter is at the resonance frequency of an LC circuit formed together by the supply network earth capacitance and the supply network's inductance and the RFI filter's common mode inductance, the common mode currents tend to return to the source of disturbance via said route and not via the desired route, i.e. via the anti-interference capacitors.

Attempts have been made to restrict the above-described saturation of common mode chokes and the increase in conducted radio-frequency disturbances resulting therefrom, by overrating the common mode chokes. Overrating is effected by expanding the cross-section of the ferrite core or the core of any similar magnetic material used in the choke. However, overrating incurs unnecessary extra costs. Moreover, the expansion of the cross-section of the core naturally increases the size of the choke employed in an undesirable manner.

### BRIEF DESCRIPTION OF THE INVENTION

The object of the present invention is to provide a method which avoids the above-described drawbacks and enables filtration of conducted high-frequency disturbances in a more efficient manner. This is achieved with the method of the invention, which is characterized by comprising the steps of
defining a common mode disturbance current of a frequency converter feeder,
comparing the magnitude of the defined common mode disturbance current with a predetermined limit value, and
changing a switching frequency of the frequency converter, when the common mode disturbance current exceeds the predetermined limit value.

The method of the invention is based on optimizing the filtration by measuring the common mode current passing in the frequency converter feeder and by changing the switching frequency of the frequency converter when the common mode current exceeds the predetermined current limit. An advantage with the method of the invention is a considerable decrease in conducted high-frequency disturbances, independent of the magnitude of earth capacitances of the motor cables used or other factors that increase the common mode current in the feeders. Optimization in accordance with the invention also enables more compact design of the RFI filters, whereby the filters need not be overrated. Consequently, utilization of the method of the invention saves both space and costs.

The invention also relates to an arrangement for optimizing the filtration of conducted high-frequency disturbances in a frequency converter, the frequency converter being coupled with a feeder to a supply network and comprising a variable switching frequency, whereby the arrangement is characterized by comprising interconnectedly
a current defining means, which is arranged to define the common mode disturbance current of the frequency converter feeder,
a comparing means, which is arranged to compare the magnitude of the common mode disturbance current with the predetermined limit value, and
a control means, which is arranged to change the switching frequency of the frequency converter.

By means of this arrangement, the advantages provided by the method of the invention can be achieved with a simple structure which requires only minimal component additions to the frequency converter or in connection thereof.

### BRIEF DESCRIPTION OF THE DRAWINGS

In the following, the invention will be described in greater detail in connection with preferred embodiments, with reference to the attached drawings, in which
Figure 1 shows a conventional network filter, and
Figure 2 shows a network filter, to which is combined a common mode current transformer.

### DETAILED DESCRIPTION OF THE INVENTION

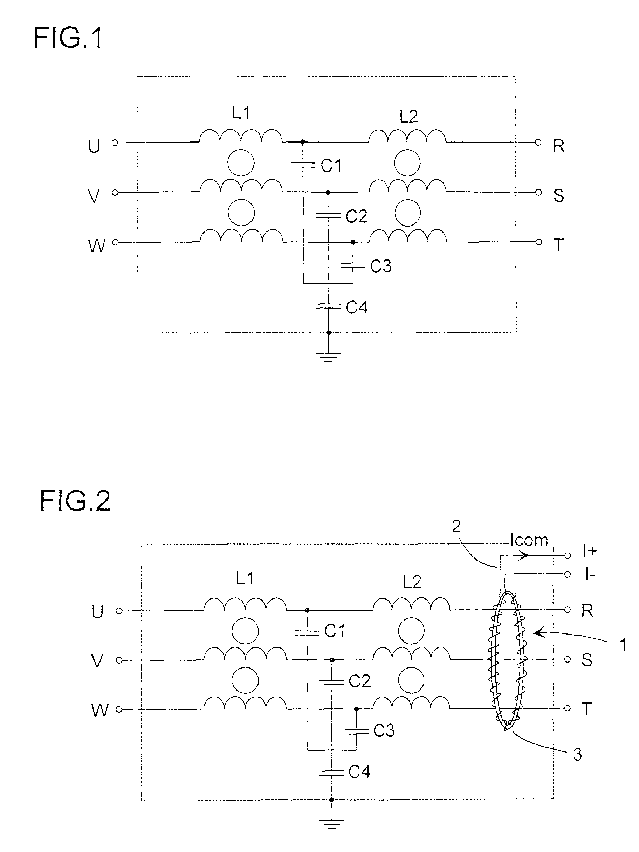

A network filter of Figure 1 is conventionally used in accordance with prior art to limit the propagation of disturbance currents either from the network to a device or from the device back to the network. The disclosed network filter comprises two common mode chokes L1, L2 and capacitor couplings C1, C2, C3 and C4. The filter works as a low-pass filter, removing components with the highest frequencies from the passing current. The filter is particularly optimized to limit the propagation of the common mode current. The common mode current refers to current components, which are codirectional disturbance currents in all phases. When using frequency converters, the common mode currents most typically result from capacitive currents passing through high earth capacitances of motor cables. High-power semiconductors of the frequency converters change states quickly, whereby quick and great changes in the potential enable propagation of the current through earth capacitances. Capacitive earth currents in turn cause an undesirable common mode current in the feeders.

The motor cables being long, the earth capacitance is quite considerable, which further causes high common mode currents. Moreover, for every motor cable length there is a switching frequency of the frequency converter, at which the common mode current is at the highest. A high common mode current causes saturation in the magnetic material of the common mode chokes, which in turn leads to a considerable decrease in the interference filtering capacity of the filter. In connection with the choke saturation, the filtering capacity decreases particularly dramatically at the frequencies of less than 1 MHz.

Figure 2 shows a network filter, to which is combined a current defining means 1 for measuring the common mode current. The functions of the network filter are similar to those of the filter in Figure 1. Input phases are intended to be coupled to filter inputs U, V, W, and further from the filter output to a device, such as a frequency converter, through connectors R, S, T. The described network filters only exemplify a possible structure of the network filter, and it is obvious that there are several different filter types for different purposes.

In accordance with the method of the invention, the common mode current of the frequency converter feeder is defined. The current defining means 1 defines the magnitude of the common mode current, and a current Icom, corresponding to the magnitude of the common mode current, passes in a signal line 2 of the means 1. In accordance with a preferred embodiment of the invention shown in Figure 2, the common mode current is defined in the phase conductors of the feeder. In accordance with Figure 2, the current defining means 1 is a common mode current transformer whose primary winding consists of phase conductors passing through the transformer core 3 and a secondary winding consists of the signal line 2. The common mode current transformer refers to a transformer that transforms a secondary current from the common mode current of the primary winding.

The current Icom of the signal line 2 is applied from the signal connectors I+, I- of the filter to the comparing means, where the magnitude of the current is compared with a predetermined limit value. If the signal line current exceeds the predetermined limit value, the switching frequency of the frequency converter will be changed. The switching frequency is changed until the disturbance current is below the limit value. For changing the switching frequency, a control means, such as a microprocessor of the frequency converter, communicating with the comparing means, changes the switching frequency instructions of the frequency converter. When needed, the switching frequency can alternatively be changed upwards or downwards, whereby the switching frequency increases or decreases. If a change of the switching frequency in one direction does not produce a desired decrease in the common mode current, it is possible to change the direction of the switching frequency. As stated, the switching frequency has an effect on the magnitude of the common mode current, and consequently on the level of conducted high-frequency disturbances. In practice, it is necessary to optimize the switching frequency only once, when putting the device into use.

When the current limit wherewith the common mode current is compared is selected such that the limit value still leaves ample allowance for the common mode filters L1, L2 to saturate, the optimum switching frequency can be searched well before potential saturation and a decrease in filtering capacity resulting therefrom. This procedure saves considerably on filter design and costs, and moreover the filtering capacity improves. Thanks to the method, the common mode currents supplied into the network by the frequency converter are also minimized, whereby fault current protections do not unnecessarily trip the device off from the network, because the fault current definition is based on measuring the common mode current.

In accordance with one preferred embodiment of the invention, the common mode disturbance current is defined directly from the input phase protective earth conductors (PE), and consequently, when using the common mode current transformer, only the protective earth conductor has to be applied through the transformer.

The common mode current transformer can also be combined to the common mode choke of the network filter. In that case, a signal line has to be added as a secondary winding to the choke. This structure further saves on magnetic material, because no separate core is necessary for the current defining means.

It is obvious to the person skilled in the art that as technology advances, the basic idea of the invention can be implemented in a variety of ways. Thus the invention and its embodiments are not restricted to the above-described examples, but they may vary within the scope of the claims.

## Claims

1. A method for optimizing the filtration of conducted high-frequency disturbances in a frequency converter, the frequency converter being coupled with a feeder to a supply network and having a variable switching frequency, **characterized** by comprising the steps of
defining a common mode disturbance current of a frequency converter feeder,
comparing the magnitude of the defined common mode disturbance current with a predetermined limit value, and
changing a switching frequency of the frequency converter, when the common mode disturbance current exceeds the predetermined limit value.

2. A method as claimed in claim 1, **characterized** in that the definition of the common mode disturbance current of the feeder comprises a step, in which the common mode disturbance current is defined from a protective earth conductor of the feeder.

3. A method as claimed in claim 1, **characterized** in that the definition of the common mode disturbance current of the feeder comprises a step, in which the common mode disturbance current is defined from phase conductors of the feeder.

4. A method as claimed in any one of claims 1 to 3, **characterized** in that the definition of the common mode disturbance current of the feeder comprises a step, in which the common mode disturbance current is defined by using a common mode current transformer (1).

5. An arrangement for optimizing the filtration of conducted high-frequency disturbances in a frequency converter, the frequency converter being coupled with a feeder to a supply network and having a variable switching frequency, **characterized** by comprising interconnectedly
a current defining means (1), which is arranged to define the common mode disturbance current of the frequency converter feeder,
a comparing means, which is arranged to compare the magnitude of the common mode disturbance current with the predetermined limit value, and
a control means, which is arranged to change the switching frequency of the frequency converter.

6. An arrangement as claimed in claim 5, **characterized** in that the current defining means is a common mode current transformer (1).
